# EUROPEAN PATENT APPLICATION

(11) **EP 4 734 126 A1**
(43) Date of publication of application: **29.04.2026**
(21) Application number: 25208752.3
(22) Date of filing: 15.10.2025
(51) Int. Cl.: G21C 17/003, G01H 1/12, G01M 7/02

(54) **REACTOR VIBRATION MEASUREMENT DEVICE**

(30) Priority: 28.10.2024 KR 20240148681
(71) Applicant: Doosan Enerbility Co., Ltd., Seongsan-gu Changwon-si, Gyeongsangnam-do 51711 (KR)
(72) Inventor: Kim, Young Hwan, Gimhae-si, Gyeongsangnam-do (KR); Nam, Ki Seong, Gimhae-si, Gyeongsangnam-do (KR); Seo, Min Chul, Gimhae-si, Gyeongsangnam-do (KR); Wang, Jin Min, Changwon-si, Gyeongsangnam-do (KR)
(74) Representative: BCKIP Part mbB

(57) **Abstract**

Proposed is proposed a reactor vibration measurement device (100) for measuring vibration of a reactor (1) in which a head (10) and a body (20) are coupled to each other by a plurality of stud coupling means (30), the device including an acceleration sensor (110) configured to be in close contact with the head and supported by a bracket (B), a fixed part (120) fixed between the plurality of stud coupling means that couple the head and the body to each other on the head, a rotating part (130) rotatably coupled to an upper portion of the fixed part, and a bracket support part (140) connected to a first side of the rotating part and configured to support the bracket that supports the acceleration sensor, the bracket support part being movable upward and downward at the first side of the rotating part.

## Description

### BACKGROUND

### 1. Technical Field

The present disclosure relates to a reactor vibration measurement device and to a reactor and a nuclear power plant including the same. More particularly, the present disclosure relates to a reactor vibration measurement device configured to measure vibration of a reactor in which a head and a body are coupled to each other by stud coupling means, as well as to a reactor and a nuclear power plant including the same.

### 2. Description of the Background Art

Reactor vessel internals (RVI) of nuclear reactors are subjected to vibrations caused by the flow of reactor coolant under both steady and transient operating conditions of a reactor vessel. Therefore, it is necessary to demonstrate, by using the actual reactor, that the structural integrity of the RVI is maintained and that sufficient safety margins are ensured throughout the entire service life of a nuclear power plant. For this purpose, a comprehensive vibration assessment program (CVAP) is performed for the RVI.

The comprehensive vibration assessment program (CVAP) for the RVI consists of analysis, measurement, and inspection. The measurement is performed during the hot functional test (HFT) of a reactor, before nuclear fuel is loaded (pre-core), as part of a pre-operational test. The purpose of the measurement is to verify vibration prediction values for the normal and transient operations of the reactor derived from the analysis, and to determine safety margins for operation throughout the entire 60-year design life span of the nuclear power plant.

In order to design and manufacture vibration measurement devices and measurement structures for the comprehensive vibration assessment program of the RVI, measurement locations and measurement items must be carefully selected in advance. Since the comprehensive vibration assessment program for the RVI requires comparing and evaluating vibration analysis results with measurement results, the measurement locations and measurement items are required to be selected on the basis of the analysis results.

In a conventional approach, for the comprehensive vibration assessment program for the RVI, vibration measurement sensors were attached to the RVI, and connected to a data acquisition system through measurement cables extending from a pressure boundary penetration part located on the upper head of the reactor.

However, due to the complex internal structure of the reactor, modifications to the structure of the RVI are required to install vibration measurement sensors and connect the measurement cables. In addition, additional measurement structures must be designed, fabricated, and installed on the RVI, and subsequently removed after completion of the measurements, which presents numerous challenges.

### Document of Related Art

(Patent Document) Korean Patent No. 10-1250334 (registered on March 28, 2013)

### SUMMARY

Accordingly, the present disclosure has been made keeping in mind the above problems occurring in the related art, and an objective of the present disclosure is to provide a reactor vibration measurement device capable of measuring vibration of a reactor by fixing a sensor for measuring the vibration of the reactor to a head of the reactor by using stud coupling means provided on the head.

In order to achieve the above objective, according to an embodiment of the present disclosure, there is provided a reactor vibration measurement device for measuring vibration of a reactor in which a head and a body are coupled to each other by a plurality of stud coupling means, the device including: an acceleration sensor configured to be in close contact with the head and supported by a bracket; a fixed part fixed between the plurality of stud coupling means that couple the head and the body to each other on the head; a rotating part rotatably coupled to an upper portion of the fixed part; and a bracket support part connected to a first side of the rotating part and configured to support the bracket that supports the acceleration sensor, the bracket support part being movable upward and downward at the first side of the rotating part.

The reactor vibration measurement device according to the present disclosure may further include: a position fixing part connected to a second side of the rotating part and being movable upward and downward at the second side of the rotating part, wherein one end of the position fixing part is in close contact with the head to support the second side of the rotating part and fix a position of the rotating part.

In the reactor vibration measurement device according to the present disclosure, the fixed part may include: a fixed end fitted and fixed between the stud coupling means arranged to be adjacent thereto; and a fastening end protruding upward from the fixed end, with the rotating part rotatably coupled to the fastening end, wherein a mounting hole in which a rotation pin is mounted may be formed in the fastening end.

The rotating part may include: a mounting body rotatably mounted to the fastening end; and a first connection body and a second connection body formed respectively on opposite ends of the mounting body to correspond to each other, with the bracket support part and the position fixing part connected respectively to the first connection body and the second connection body , wherein a first connection hole and a second connection hole to which the bracket support part and the position fixing part are respectively connected may be respectively formed in the first connection body and the second connection body.

A coupling end that is rotatably coupled to the fastening end may be formed to protrude from a lower portion of the mounting body, and a mounting hole in which the rotation pin is mounted may be formed in the coupling end.

The mounting body may have a rod shape, the first connection body and the second connection body may protrude outward from the opposite ends of the mounting body, and the rotating part may have an "I"-shaped cross-section.

The bracket support part may include: a support body configured to support the bracket; a support-body fastening bolt having one end which passes through the first connection hole and is fastened to the support body, with the support-body fastening bolt movable upward and downward at the first side of the rotating part; and first nuts mounted on the support-body fastening bolt to be spaced apart from each other to correspond to each other with respect to the rotating part.

A coupling hole to which the support-body fastening bolt is coupled may be formed on an upper surface of the support body, and a mounting recess in which the bracket is mounted may be formed on a lower surface of the support body.

The position fixing part may include: a vertically movable bolt having one end which passes through the second connection hole and is in close contact with the head, with the vertically movable bolt movable upward and downward at the second side of the rotating part; and second nuts mounted to the vertically movable bolt to be spaced apart from each other to correspond to each other with respect to the rotating part.

According to another embodiment of the present disclosure, there is provided a nuclear reactor comprising: a head; a body; a plurality of stud coupling means coupling the head and the body; and a reactor vibration measurement device for measuring vibration of the reactor, wherein the reactor vibration measurement device comprises: an acceleration sensor configured to be in close contact with the head and supported by a bracket; a fixed part fixed between the plurality of stud coupling means that couple the head and the body to each other on the head; a rotating part rotatably coupled to an upper portion of the fixed part; and a bracket support part connected to a first side of the rotating part and configured to support the bracket that supports the acceleration sensor, the bracket support part being movable upward and downward at the first side of the rotating part.

According to still another embodiment of the present disclosure, there is provided a nuclear power plant comprising a nuclear reactor, wherein the nuclear reactor comprise a head; a body; a plurality of stud coupling means coupling the head and the body; and a reactor vibration measurement device for measuring vibration of the reactor, wherein the reactor vibration measurement device comprises: an acceleration sensor configured to be in close contact with the head and supported by a bracket; a fixed part fixed between the plurality of stud coupling means that couple the head and the body to each other on the head; a rotating part rotatably coupled to an upper portion of the fixed part; and a bracket support part connected to a first side of the rotating part and configured to support the bracket that supports the acceleration sensor, the bracket support part being movable upward and downward at the first side of the rotating part.

According to the reactor vibration measurement device of the present disclosure, it is possible to measure the vibration of the reactor in a state in which the acceleration sensor for measuring vibration is fixed to the head of the reactor by using the stud coupling means that connects the head and the body of the reactor, the fixed part, and the rotating part, without attaching the acceleration sensor to the internal structure of the reactor.

In addition, since the bracket, which supports the acceleration sensor, is not fixed to the head of the reactor by welding, magnets, or adhesives, the bracket can be easily removed from the head after measuring the vibration of the reactor, and since methods such as welding are not used, damage to the head can be prevented.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a plan view showing a state in which a reactor vibration measurement device according to an embodiment of the present disclosure is fixed to a reactor by a stud coupling means that couples a head and a body of a reactor;
FIG. 2 is an enlarged perspective view of portion "A" of FIG. 1;
FIG. 3 is an enlarged view of a fixed part, a rotating part, a bracket support part, and a position fixing part shown in FIG. 2.
FIGS. 4 and 5 are schematic views illustrating the process of fixing a bracket attached to the head of the reactor by using the fixed part, the rotating part, the bracket support part, and the position fixing part illustrated in FIG. 3; and
FIG. 6 is a view illustrating a modified example of the reactor vibration measurement device according to the present disclosure.

### DETAILED DESCRIPTION

Hereinafter, exemplary embodiments of the present disclosure will be described in detail with reference to the accompanying drawings. Prior to this, terms and words used in this specification and claims should not be construed as limited to their usual or dictionary meanings, and based on the principle that the inventor can appropriately define the concepts of the terms in order to explain his or her invention in the best way, the terms are required to be interpreted as meanings and concepts consistent with the technical idea of the present disclosure.

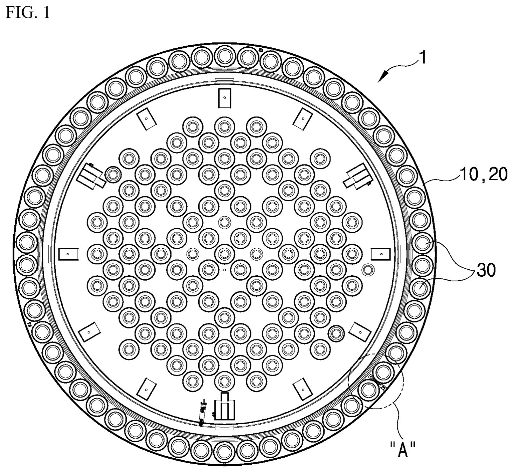

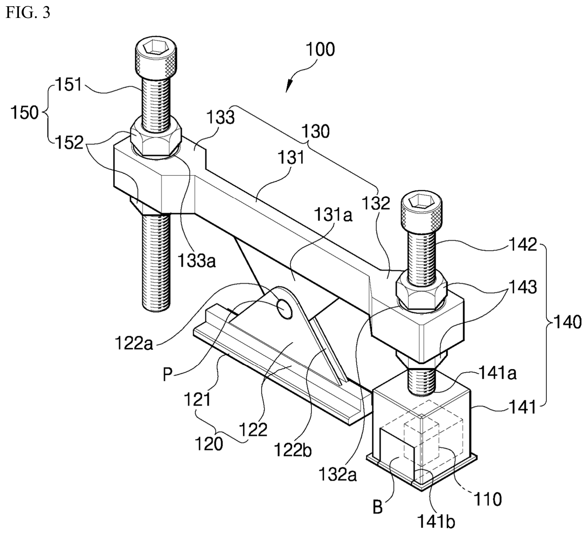

Referring to FIGS. 1 to 3, a reactor vibration measurement device 100 according to an embodiment of the present disclosure is intended to measure the vibration of a reactor 1, in which a head 10 and a body 20 are coupled to each other by stud coupling means 30. The reactor vibration measurement device 100 includes an acceleration sensor 110, a fixed part 120, a rotating part 130, and a bracket support part 140, and may further include a position fixing part 150.

In the present disclosure, the term "stud coupling means" refers to a hardware structural assembly that couples the head the body. For example, the structural assembly of the stud coupling means may include a plurality of stud bolts that are threaded into corresponding stud holes formed in the reactor body, and nuts that are fastened to upper ends of the stud bolts to secure the head to the body. Nuclear fuel used as fuel for the reactor 1 must be replaced at regular intervals, and when replacing the nuclear fuel, the stud coupling means 30 is detached, and then the head 10, which covers the body 20, is removed to replace the nuclear fuel inside the body 20. The stud coupling means 30 must be necessarily installed on the reactor 1 to couple the head 10 and the body 20 to each other.

The acceleration sensor 110, which measures vibration, may be in close contact with the head 10 and be supported by a bracket B. The acceleration sensor 110 may be positioned inside the bracket B, and the bracket B may serve to support the acceleration sensor 110 and protect the acceleration sensor 110 to prevent the acceleration sensor 110 from receiving external impacts.

The fixed part 120 may be provided on the head 10. The fixed part 120 may be disposed between a plurality of stud coupling means 30 which couples the head 10 and the body 20, and is fixed by being fitted to the stud coupling means 30 arranged adjacent thereto. According to an embodiment, the fixed part 120 may be disposed between two adjacent stud coupling means 30.

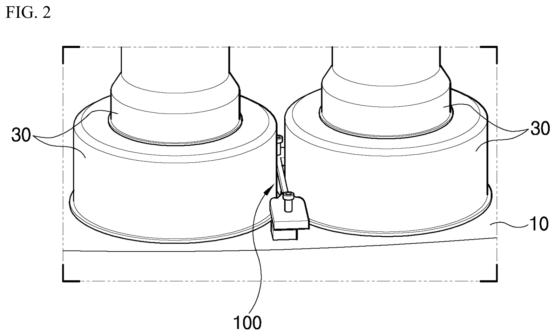

Referring to FIGS. 2 to 5, the fixed part 120 may include a fixed end 121 and a fastening end 122. It is preferable that the fixed end 121, which may be formed as a thin rectangular plate, is fitted between two adjacent stud coupling means 30 arranged to be adjacent to the head 10. A fitting groove (not shown), into which the fixed end 121 is inserted, may be formed in the outer circumference of each of the stud coupling means 30. The fixed end 121 may be secured between the stud coupling means 30 by being inserted into the fitting groove (not shown).

The direction along a long edge of the thin rectangular plate of the fixed end 121 may be referred to as a longitudinal direction, and the direction along a short edge of the thin rectangular plate of the fixed end 121 may be referred to as a width direction. The fitting groove in the stud coupling means 30 may be formed by being extended along the longitudinal direction.

According to an embodiment, one side of the fixed end 121 may be inserted into a fitting groove of one stud coupling means 30, and the opposite side of the fitting end 121 may be inserted into a fitting groove of another coupling means 30, which is adjacent to the one coupling means 30. In this manner, the fixed end 121 may be secured between the two adjacent stud coupling means by being inserted into their respective fitting grooves.

The fastening end 122 may protrude from the upper portion of the fixed end 121. The fastening end 122 may be formed integrally with the fixed end 121. The rotating part 130 may be rotatably coupled to the fastening end 122.

Preferably, the fastening end 122 may include a mounting hole 122a in which a rotation pin P is mounted for rotatably coupling the rotating part 130. The fastening end 122 may protrude upward from the upper portion of the fixed end 121 to have a triangular shape, and an insertion recess 122b, into which the lower portion of the rotating part 130 is inserted, may be formed in the fastening end 122 in a width direction thereof. The insertion recess 122b may be formed by being extended along the longitudinal direction.

The fastening end 122, in which the insertion recess 122b is formed, has been described as being integrally formed on the upper portion of the fixed end 121, but the present disclosure is not limited thereto. The fastening end 122 may instead include a first fastening end (not shown) and a second fastening end (not shown), each having a respective mounting hole. In such embodiment, the first fastening end and the second fastening end may be arranged to be spaced apart from each other on the upper portion of the fixed end 121 and may be mounted thereon by welding.

The rotating part 130 may be rotatably coupled to the upper portion of the fixed part 120 by using the rotation pin P, wherein the rotating part 130 may include a mounting body 131, a first connection body 132, and a second connection body 133.

The mounting body 131 is rotatably mounted to the fastening end 122 by the rotation pin P. A coupling end 131a, having a triangular shape, may protrude from a lower portion of the mounting body 131 to be rotatably coupled to the fastening end 122. A mounting hole 131b, in which the rotation pin P is mounted, may be formed in the coupling end 131a. Preferably, the coupling end 131a is inserted into the insertion recess 122b formed in the fastening end 122, or inserted between the first fastening end (not shown) and the second fastening end (not shown), which are provided spaced apart from each other.

The mounting body 131 includes the first connection body 132 and the second connection body 133 formed on opposite ends thereof to correspond to each other. The bracket support part 140 and the position fixing part 150 may be respectively connected to the first connection body 132 and the second connection body 133.

It is preferable that the mounting body 131 has a rod shape, the first connection body 132 and the second connection body 133 protrude outward from opposite ends of the mounting body 131, and the rotating part 130 has an "I"-shaped cross-section. The rod shape may be formed by being extended along the longitudinal direction.

It is preferable that the first connection body 132 and the second connection body 133, which are respectively formed correspondingly on the opposite ends of the mounting body 131, are integrally formed with the mounting body 131. A first connection hole 132a and a second connection hole 133a may be respectively formed in the first connection body 132 and the second connection body 133.

The bracket support part 140 may be inserted into and connected to the first connection hole 132a, and the position fixing part 150 may be inserted into and connected to the second connection hole 133a. The bracket support part 140 may be connected to a first side of the rotating part 130 through the first connection hole 132a, and may support the bracket B which in turn supports the acceleration sensor 110, while moving up and down at the first side of the rotating part 130. The bracket support part 140 may include a support body 141, a support-body fastening bolt 142, and first nuts 143. The support body 141 may serve to support the bracket B, which supports the acceleration sensor 110.

The support body 141 may be fastened to one end of the support-body fastening bolt 142, which passes through the first connection hole 132a formed in the first connection body 132. The support-body fastening bolt 142 may be movable up and down through the first connection hole 132a formed on the first side of the rotating part 130.

It is preferable that the first nuts 143 may be mounted on the support-body fastening bolt 142 at positions spaced apart from each other so as to correspond to each other with respect to the rotating part 130. That is, two first nuts 143 may be mounted on the support-body fastening bolt 141 - one on an upper side of the rotating part 130 and the other one a lower side of the rotating part 130. As the support-body fastening bolt 142 rotates clockwise or counterclockwise, the support-body fastening bolt 142 may move upward and downward through the first connection body 132. The first nuts 143 may serve to prevent the support-body fastening bolt 142 from being disengaged from the first connection hole 132a.

It is preferable that a coupling hole 141a, to which the one end of the support-body fastening bolt 142 passing through the first connection hole 132a is coupled, may be formed on an upper surface of the support body 141, and a mounting recess 141b in which the bracket B is mounted may be formed on a lower surface of the support body 141.

The position fixing part 150 may be inserted into and connected to the second connection hole 133a formed in the second connection body 133. The position fixing part 150 may move upward and downward at a second side of the rotating part 130, wherein one end of the position fixing part 150 is in close contact with the head 10 to support the second side of the rotating part 130 and fix the position of the rotating part 130.

The position fixing part 150, which is inserted into the second connection hole 133a and connected to the second side of the rotating part 130, may include a vertically movable bolt 151 and second nuts 152. One end of the vertically movable bolt 151 may passe through the second connection hole 133a and may be in close contact with the head 10, and the vertically movable bolt 151 moves upward and downward at the second side of the rotating part 130 as the vertically movable bolt 151 rotates clockwise or counterclockwise.

The second nuts 152 may be mounted on the vertically movable bolt 151 to be spaced apart from each other so as to correspond to each other with respect to the rotating part 130. That is, two second nuts 152 may be mounted on the vertically movable bolt 151 - one on an upper side of the rotating part 130 and the other one on a lower side of the rotating part 130. The second nuts 152 may serve to prevent the vertically movable bolt 151 from being disengaged from the second connection hole 133a.

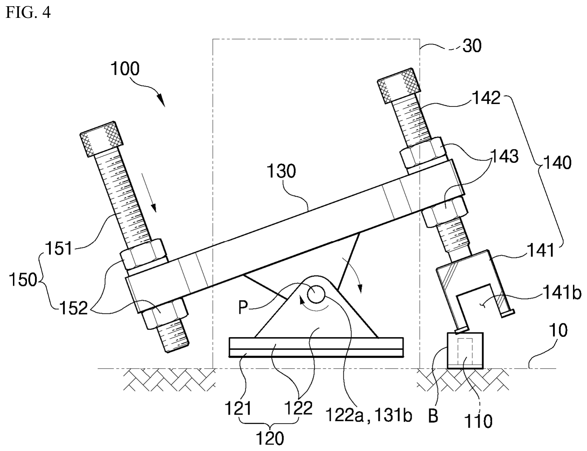

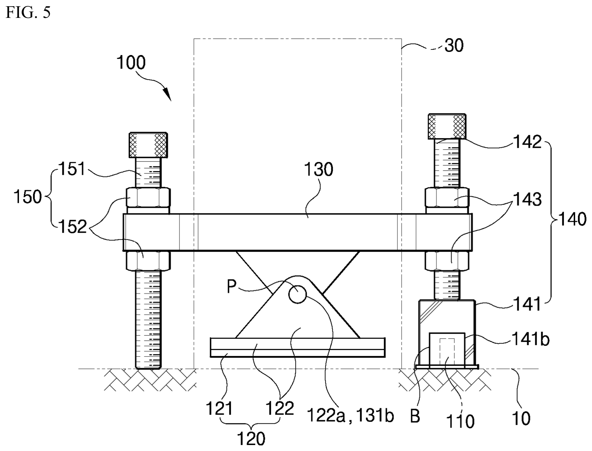

Referring to FIGS. 4 and 5, when the bracket B, which supports the acceleration sensor 110 in close contact with the head 10, is supported by the bracket support part 140 connected to the first side of the rotating part 130, the rotating part 130 may rotate about the rotation pin P such that the first side of the rotating part 130 ascends and the second side thereof descends on the fixed part 120 fixed between two adjacent stud coupling means 30.

According to an embodiment, by connecting the position fixing part 150 to the second side of the rotating part 130, and rotating the vertically movable bolt 151 of the position fixing part 150 to lower the vertically movable bolt 151 toward the head 10 and rotating the vertically movable bolt 151 continuously while the one end of the vertically movable bolt 151 is in close contact with the head 10, then the second side of the rotating part 130 gradually ascends, and the first side of the rotating part 130 gradually descends. As a result, the first side of the rotating part 130 securely supports the bracket B downward from the upper side thereof.

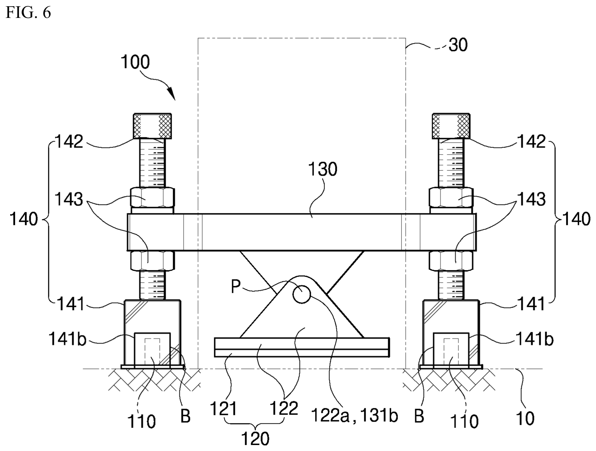

Referring to FIGS. 1 and 6, according to another embodiment of the present disclosure, the bracket support part 140 may include bracket support parts 140 respectively connected to the first and second sides of the rotating part 130. By connecting the bracket support parts 140 to opposite sides of the rotating part 130 to correspond to each other, the acceleration sensor 110, disposed at corresponding positions with respect to the fixed part 120, may be supported by the bracket B and fixed to the upper portion of the head 10.

The vibration of the reactor 1 may be measured by fixing the acceleration sensor 110, which measures the vibration of the reactor 1, to the head 10 of the reactor 1 by using the stud coupling means 30, which couples the head 10 and the body 20 to each other, the fixed part 120, and the rotating part 130, without attaching the acceleration sensor 110 to the internal structure of the reactor 1.

In addition, since the bracket B, which supports the acceleration sensor 110, is not fixed to the head 10 of the reactor 1 by welding, magnets, or adhesives, the bracket B may be easily separated from the head 10 after completion of the vibration measurement of the reactor 1. Furthermore, because methods such as welding are not used, damage to the head 10 may be prevented.

The present disclosure has been described with reference to the embodiments illustrated in the drawings, but these embodiments are merely illustrative, and those skilled in the art will understand that various modified embodiments and equivalent other embodiments are possible therefrom. Also, it is noted that any one feature of an embodiment of the present disclosure described in the specification may be applied to another embodiment of the present disclosure. Similarly, the present invention encompasses any embodiment that combines features of one embodiment and features of another embodiment. Therefore, the scope of technical protection of the present disclosure should be determined by the technical spirit of the attached claims.

## Claims

1. A reactor vibration measurement device (100) for measuring vibration of a reactor (1) in which a head (10) and a body (20) are coupled to each other by a plurality of stud coupling means (30), the device comprising:
an acceleration sensor (110) configured to be in close contact with the head (10) and supported by a bracket (B);
a fixed part (120) fixed between the plurality of stud coupling means (30) that couple the head (10) and the body (20) to each other on the head (10);
a rotating part (130) rotatably coupled to an upper portion of the fixed part (120); and
a bracket support part (140) connected to a first side of the rotating part (130) and configured to support the bracket(B) that supports the acceleration sensor (110), the bracket support part (140) being movable upward and downward at the first side of the rotating part (130).

2. The reactor vibration measurement device (100) of claim 1, further comprising:
a position fixing part (150) connected to a second side of the rotating part (130) and being movable upward and downward at the second side of the rotating part (130), wherein one end of the position fixing part (150) is in close contact with the head (10) to support the second side of the rotating part (130) and fix a position of the rotating part (130).

3. The reactor vibration measurement device (100) of claim 2, wherein the fixed part (120) comprises:
a fixed end (121) fitted and fixed between the stud coupling means (30) arranged to be adjacent thereto; and
a fastening end (122) protruding upward from the fixed end (121), with the rotating part (130) rotatably coupled to the fastening end (122),
wherein a mounting hole (122a) in which a rotation pin (P) is mounted is formed in the fastening end (122).

4. The reactor vibration measurement device (100) of claim 3, wherein the rotating part (130) comprises:
a mounting body (131) rotatably mounted to the fastening end (122); and
a first connection body (132) and a second connection body (133) formed respectively on opposite ends of the mounting body (131) to correspond to each other, with the bracket support part (140) and the position fixing part (150) connected respectively to the first connection body (132) and the second connection body (133),
wherein a first connection hole (132a) and a second connection hole (133a) to which the bracket support part (140) and the position fixing part (150) are respectively connected are respectively formed in the first connection body (132) and the second connection body (133).

5. The reactor vibration measurement device (100) of claim 4, wherein a coupling end (131a) that is rotatably coupled to the fastening end (122) is formed to protrude from a lower portion of the mounting body (131), and
a mounting hole (131b) in which the rotation pin (P) is mounted is formed in the coupling end (131a),
wherein the mounting body (131) has a rod shape,
the first connection body (132) and the second connection body (133) protrude outward from the opposite ends of the mounting body (131), and
the rotating part (130) has an "I"-shaped cross-section.

6. The reactor vibration measurement device (100) of claim 4, wherein the bracket support part (140) comprises:
a support body (141) configured to support the bracket (B);
a support-body fastening bolt (142) having one end which passes through the first connection hole (132a) and is fastened to the support body (141), with the support-body fastening bolt (142) movable upward and downward at the first side of the rotating part (130); and
first nuts (143) mounted on the support-body fastening bolt (142) to be spaced apart from each other to correspond to each other with respect to the rotating part (130),
wherein a coupling hole (141a) to which the support-body fastening bolt (142) is coupled is formed on an upper surface of the support body (141), and
a mounting recess (141b) in which the bracket is mounted is formed on a lower surface of the support body (141).

7. The reactor vibration measurement device (100) of claim 4, wherein the position fixing part (150) comprises:
a vertically movable bolt (151) having one end which passes through the second connection hole (133a) and is in close contact with the head (10), with the vertically movable bolt (151) movable upward and downward at the second side of the rotating part (130); and
second nuts (152) mounted to the vertically movable bolt (151) to be spaced apart from each other to correspond to each other with respect to the rotating part (130).

8. A nuclear reactor (1) comprising:
a head (10);
a body (20);
a plurality of stud coupling means (30) coupling the head (10) and the body (20); and
a reactor vibration measurement device (100) for measuring vibration of the reactor (1), wherein the reactor vibration measurement device (100) comprises:
an acceleration sensor (110) configured to be in close contact with the head (10) and supported by a bracket (B);
a fixed part (120) fixed between the plurality of stud coupling means (30) that couple the head (10) and the body (20) to each other on the head (10);
a rotating part (130) rotatably coupled to an upper portion of the fixed part (120); and
a bracket support part (140) connected to a first side of the rotating part (130) and configured to support the bracket (B) that supports the acceleration sensor (110), the bracket support part (140) being movable upward and downward at the first side of the rotating part (130).

9. The nuclear reactor (1) of claim 8, wherein the reactor vibration measurement device (100) further comprising:
a position fixing part (150) connected to a second side of the rotating part (130) and being movable upward and downward at the second side of the rotating part (130), wherein one end of the position fixing part (150) is in close contact with the head (10) to support the second side of the rotating part (130) and fix a position of the rotating part (130).

10. The nuclear reactor (1) of claim 9, wherein the fixed part (120) comprises:
a fixed end (121) fitted and fixed between the stud coupling means (30) arranged to be adjacent thereto; and
a fastening end (122) protruding upward from the fixed end (121), with the rotating part (130) rotatably coupled to the fastening end (122),
wherein a mounting hole (122a) in which a rotation pin (P) is mounted is formed in the fastening end (122).

11. The nuclear reactor (1) of claim 10, wherein the rotating part (130) comprises:
a mounting body (131) rotatably mounted to the fastening end (122); and
a first connection body (132) and a second connection body (133) formed respectively on opposite ends of the mounting body (131) to correspond to each other, with the bracket support part (140) and the position fixing part (150) connected respectively to the first connection body (132) and the second connection body (133),
wherein a first connection hole (132a) and a second connection hole (133a) to which the bracket support part (140) and the position fixing part (150) are respectively connected are respectively formed in the first connection body (132) and the second connection body (133).

12. The nuclear reactor (1) of claim 11, wherein a coupling end (131a) that is rotatably coupled to the fastening end (122) is formed to protrude from a lower portion of the mounting body (131), and
a mounting hole (131b) in which the rotation pin (P) is mounted is formed in the coupling end (131a),
wherein the mounting body (131) has a rod shape,
the first connection body (132) and the second connection body (133) protrude outward from the opposite ends of the mounting body (131), and
the rotating part (130) has an "I"-shaped cross-section.

13. The nuclear reactor (1) of claim 11, wherein the bracket support part (140) comprises:
a support body (141) configured to support the bracket (B);
a support-body fastening bolt (142) having one end which passes through the first connection hole (132a) and is fastened to the support body (141), with the support-body fastening bolt (142) movable upward and downward at the first side of the rotating part (130); and
first nuts (143) mounted on the support-body fastening bolt (142) to be spaced apart from each other to correspond to each other with respect to the rotating part (130),
wherein a coupling hole (141a) to which the support-body fastening bolt (142) is coupled is formed on an upper surface of the support body (141), and
a mounting recess (141b) in which the bracket is mounted is formed on a lower surface of the support body (141).

14. The nuclear reactor (1) of claim 11, wherein the position fixing part (150) comprises:
a vertically movable bolt (151) having one end which passes through the second connection hole (133a) and is in close contact with the head (10), with the vertically movable bolt (151) movable upward and downward at the second side of the rotating part (130); and
second nuts (152) mounted to the vertically movable bolt (151) to be spaced apart from each other to correspond to each other with respect to the rotating part (130).

15. A nuclear power plant comprising the nuclear reactor (1) of claim 9.
